# EUROPEAN PATENT SPECIFICATION

(11) **EP 2 881 595 B1**
(45) Date of publication and mention of the grant of the patent: **22.08.2018**
(21) Application number: 13195437.2
(22) Date of filing: 03.12.2013
(51) Int. Cl.: F01D 17/16, F01D 21/00, F02C 9/20, F04D 29/56, F15B 20/00

(54) **Device for emergency operation of actuators**
Vorrichtung für Notbetrieb von Aktuatoren
Dispositif pour un fonctionnement d'urgence d'actionneurs

(43) Date of publication of application: 10.06.2015
(73) Proprietor: Ansaldo Energia IP UK Limited, London W1G 9DQ (GB)
(72) Inventor: Banay, Slaven, 5412 Gebenstorf (CH); Burch, Eduard, 5436 Wuerenlos (CH); Bauer, Roger, 8045 Zurich (CH)
(74) Representative: Bernotti, Andrea

(56) References cited:
- EP-A1- 2 541 074
- WO-A1-2013/078878
- DE-U1-202008 012 466
- US-A- 4 989 495
- YEAPLE ET AL: "FLUID POWER DESIGN HANDBOOK", 1995, XP002136333,

## Description

The present invention relates to a device for an emergency operation of hydraulic actuators. Such hydraulic actuators are used for the actuation of variable inlet guide vanes of gas turbines.

For the operation and control of such actuators, it is conventionally known to provide an operation cycle including at least a proportional valve for switching to different operational conditions of the actuator and the related engine components, wherein the proportional valve is arranged in a supply line of pressurized liquid or gas and in a drain line connected to a tank of the operation cycle, and in which control means are provided for different control and supervision functions. During the normal operation of such hydraulic actuators, the proportional valve is used as a control means for switching the actuator, for example, from an open position to a closed position of the actuator and thereby the connected related engine parts. For the purpose of a position control of such actuators, there are conventionally provided sensors and position detectors, for example angle position transducers. These sensors supply an input signal to the control means of the operation cycle such that the correct positioning of the related engine parts can be set by means of the operation of the actuator.

In some situations, however, the correct control of the proportional valve and the hydraulic actuator is not possible: for example, in a case where the sensors or position detectors of the engine parts do not function anymore or do not provide the correct values, the control of the proportional valve will immediately get incorrect. Also in a case where the proportional valve of the operation cycle has a failure, e.g. a control electronics failure occurs, the normal operation of the actuator and engine components is not possible anymore. Such situations are also given in cases where the signal data quality of the sensors or the position detectors is bad. In all these cases, the prior art devices for an operation of, for example, hydraulic actuators in gas turbines give rise to a high risk of a damaging of engine parts, because the normal control system is not able anymore to bring the actuators in a required safe position, for example a closed position of variable inlet guide vanes of compressors of gas turbines. In such a case, for example, when the angle transducers (position sensors) indicate false measurements of the actual positioning of the guide vanes, the conventional control of such devices is blocked, and the engine or gas turbine is tripped. The gas turbine will thereby coast down with open variable inlet guide vanes of the compressor, which has a high potential of a rotation stall and which therefore may cause severe damages to the compressor or other parts of the gas turbine.

WO 2013/078878 describes a comprehensive regulation device for a small speed-regulator based on an integrated hydraulic pressure technology. US 4989495 describes a hydraulic positioning system with normal and high supply and exhaust flow paths. DE 20 2008 012466 describes a control block for a double-acting hydraulic rotary actuator for controlling a steam turbine.

In view of these disadvantages of the prior art solutions, it is the problem of the present invention to provide a device for an emergency operation of hydraulic actuators of engine components of gas turbines, which efficiently avoids damages and undesired operational situations of the actuators in case of failures of the normal operation modus of the actuators. In particular, the problem underlying the present invention is to provide a safe emergency operation modus for such hydraulic actuators.

This problem is solved by means of a device with the features of claim 1. Further developments and advantageous forms of realization of the invention are the subject matter of the dependent claims.

The device for an emergency operation of hydraulic actuators according to the disclosure is provided with an operation cycle for the normal operation, including at least a proportional valve for switching to different operational conditions of the actuator and the related engine components connected to the actuator, whereby the proportional valve is arranged in a supply line of pressurized liquid and in a drain line connected to a tank, and whereby control means for operation control and supervising functions are provided, the device of the invention being such that an emergency cycle is attached to said operation cycle of said actuator, which is provided with: two solenoid valves for initiating an emergency operation impulse in case of detected failures; a plurality of hydraulically operated switch valves, which may be activated through said impulse of an emergency signal from said solenoid valves; and whereby the emergency cycle is adapted to bypass said proportional valve in emergency situations and to bring said actuator in a predefined safe position. In case of failures, for example with regard to the proportional valve or to detection means of the control means, the device according to the disclosure switches directly from the normal operation cycle to the additional emergency cycle, which is adapted to execute specific predefined safety functions: the emergency cycle comprises in particular two solenoid valves for initiating an emergency operation impulse, i.e. for starting the switching from the normal operation cycle to the emergency cycle. Furthermore, the emergency cycle is provided with a plurality of hydraulically operated switch valves, which are connected to the normal operation cycle and the emergency cycle such that they may be activated through the impulse of an emergency signal from said solenoid valves in such a manner that the proportional valve is bypassed in the emergency situation and that the actuator is brought into a predefined safe position.

Upon assessment of a failure in the normal system, the solenoid valves will be actuated, either manually or automatically, and consequently an impulse of emergency situation will be sent to the switch valves, which will then change the operation modus from the normal operation to the emergency operation. In this emergency operation modus, the normal proportional valve, serving as a control means for the actuator, is put out of function, and the actuator is brought into the desired safe emergency position. A safe emergency position of the actuator is a predefined end position, in the case of a hydraulic actuator of the cylinder/piston type, for example, a completely extended position of the actuator. By means of this emergency device, the engine components, for example the variable inlet guide vanes of a compressor in a gas turbine, may be brought into a closed safe position, which prevents any damages to the engine components due to the necessary rundown of the gas turbine. Through the device for an emergency operation according to the invention, a kind of combined electronic and hydraulic safety backup system is provided. With the invention, an immediate switching from a normal operation to an emergency operation is enabled. The related engine components connected to the actuators are directly put into a safe position, in which the failure of the operation cycle or components of the operation cycle does not lead to any damages to the different components of the engine. This switching into an emergency operation according to the invention functions independently of the proportional valve (control means) of the normal operation cycle such that even in case of problems with regard to this proportional valve the actuator is nevertheless brought into a safe emergency position.

According to an advantageous aspect of the invention, means for the detection of a correct functioning of said actuator are provided for supplying an input signal or emergency signal to said control means of the device. Such means for the detection of a correct functioning may, for example, be realized in position sensors, angle position transducers or other software or hardware sensor means. These means according to the invention provide information in view of problems of the normal operation, any failure of components, false signal data, or the like. In case of problems in the normal operation modus, the means provide an input signal or emergency signal to said control means of the device for an emergency operation according to the invention such that an immediate switching into a safe emergency operation modus can be initiated and carried out.

According to a further advantageous aspect of the invention, the control means of the device are connected to said at least one solenoid valve for switching automatically to an emergency operation in case of failures in the normal operation modus of said actuator. By means of this, the safety of an operation of the actuators and the related engine components is even more increased. Immediately after the occurrence of a failure or problem in the components of the normal system, the device switches to the emergency cycle, in which the normal proportional valve is bypassed and the actuator is brought into a predefined safe position.

According to the invention, the emergency cycle is provided with a first solenoid valve and a second solenoid valve, which are provided such that upon a simultaneous activation of these solenoid valves the actuator is brought into a predefined safe position, in particular an end position of the actuator. By means of this, the emergency function of the device can be chosen selectively. The actuator may be put into a predefined safe position in case of a failure of components or false information in the data of sensors. Such a safe predefined position of the actuator may, for example, be a completely extended position of the piston of a hydraulic actuator, which usually is a closed position of the connected related engine components of a compressor of a gas turbine, or the like. This has the advantage that damages due to the failure in the system can be avoided. Immediately after detection of a problem, the device according to the invention switches into the operation of the emergency cycle, in which the safe position of the actuator is obtained.

According to a further advantageous aspect of the invention, the predefined safe position, into which the emergency cycle sets the actuator, is an extended position of said actuator corresponding in particular to a closed position of related engine components. These engine components may, for example, be inlet guide vanes of a compressor or a turbine. The hydraulic actuator for opening and closing the variable inlet guide vanes is upon failure of the system brought in the predefined safe position, which is an extended position of the actuator and which corresponds to a closing of these guide vanes. Hereby, any damage to the compressor and the turbine components due to an inadmissible rotation stall is effectively avoided.

According to a further advantageous aspect of the invention, the emergency cycle of the device comprises a flow control valve for adjusting a switching speed of the switching from a normal operation to an emergency operation in case of a failure in the system. The flow control valve may, for example, be a manually adjustable orifice, which is arranged in a drain line of the cycle. With this flow control valve of the emergency cycle, the speed of a change into the emergency operation may be set. Thereby, for example, the emergency closing rate in case of the closing of the variable inlet guide vanes of a compressor of a gas turbine may be determined in terms of the time necessary to achieve the final safe position. By setting the flow control valve manually, the speed of the change from the normal operation into the emergency operation can individually be adapted to the respective situation and type of engines.

According to a further advantageous aspect of the invention, the control means of the device are adapted to interrupt the emergency operation and to resume normal operation upon request of a user. In this manner, at any time of the emergency operation, the system may be brought back into the normal operation modus, for example in case the failure has already been repaired or removed.

According to a further advantageous aspect of the invention, a detector for supervising the position of said proportional valve of the normal operation cycle is provided. By means of such a detector for supervising the position of the proportional valve, this detector can be provided as a direct sensor on the proportional valve or can be indirectly realized by means of for example an angle position transducer on the side of the related engine components, for example the variable inlet guide vanes. The supervising of the position of the proportional valve further increases the safety of the operation of such actuators, since also deviations between the position in the engine parts and the position of the proportional valve can be detected and can in an advantageous manner serve for the control of the emergency cycle or normal cycle of the device.

According to a further advantageous aspect of the invention, the actuator is a hydraulic actuator of a variable inlet guide vane of a gas turbine. The inlet guide vanes will automatically be closed in case of a problem or failure in the system due to the direct switching from the normal cycle into the emergency cycle. Any damage to the components of the gas turbine and namely the parts of the compressor is hereby avoided. The invention is certainly also applicable to other types or components of engines or machines. The actuator according to the present invention may be a hydraulic actuator, and the realization of the emergency function by means of the emergency cycle according to the present invention requires only the adaption of the respective hydraulic cycles depending on the respective situations and type of related engine parts.

In the following, the invention will be described in more detail on the basis of an example of realization shown in the attached drawings. In the drawings shows
- Fig. 1: a schematic hydraulic diagram of an example of realization of a device according to the invention in a normal operation closing modus;
- Fig. 2: a schematic hydraulic diagram of an example of realization of a device according to the invention in a normal operation opening modus;
- Fig. 3: a schematic hydraulic diagram of an example of realization not part of the invention in an emergency operation blocking modus;
- Fig. 4a: a schematic hydraulic diagram of an example of realization of a device according to the invention in an emergency operation closing modus (part 1); and
- Fig. 4b: a schematic hydraulic diagram of an example of realization of a device according to the invention in an emergency operation closing modus (part 2).

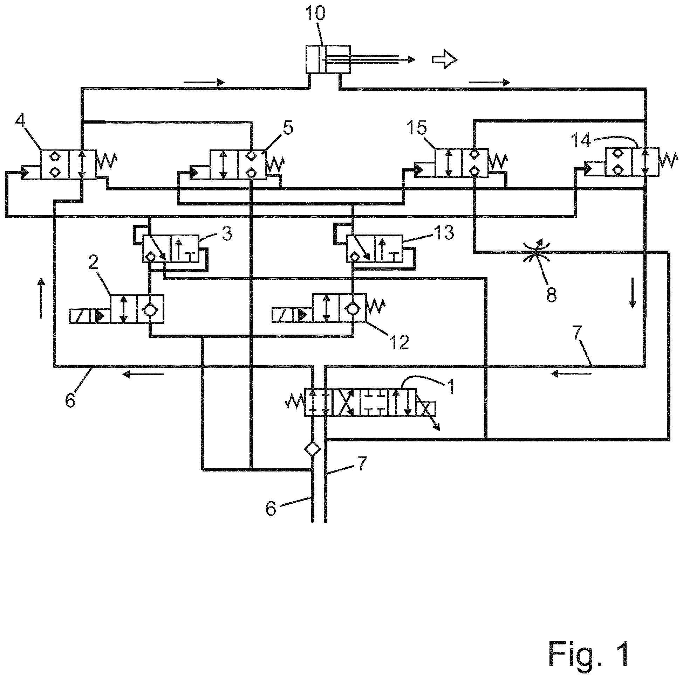

An example of realization of a device for an emergency operation of a hydraulic actuator 10 is shown in different operational situations in the schematic hydraulic diagrams of Fig 1 to Fig. 4b. The respective active hydraulic lines are in the drawings indicated with thicker lines and flow arrows for the purpose of a better understanding.

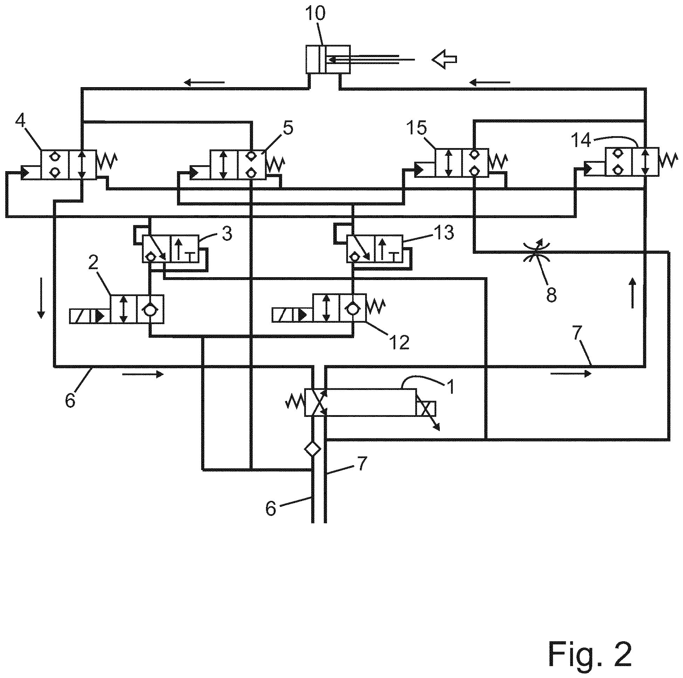

In Fig. 1 and Fig. 2, the example of realization of an emergency device according to the invention is shown in a normal operation, i.e. without any failures in the hydraulic system or with regard to components of a device, wherein Fig. 1 shows the normal operation closing modus for the hydraulic actuator 10 and Fig. 2, on the contrary, the normal operation opening modus of the hydraulic actuator 10.

For the normal operation and control of the hydraulic actuator 10, the device is provided with a proportional valve 1, which is mounted in a hydraulic supply line 6 and in a hydraulic drain line 7, which are connected to a means for pressurizing a hydraulic liquid and to a tank, respectively. The proportional valve 1 is connected to a control means (not shown), by means of which different operational conditions can be set. During the normal operation, the proportional valve 1 is switched between a closing modus, an opening modus, a blocking modus, or the like in order to control the hydraulic actuator 10. In this example of realization, the hydraulic actuator 10 is of the type piston/cylinder and serves for the actuation of variable inlet guide vanes of a gas turbine or compressor of a gas turbine. However, the principle of the invention may also be applied to any other type of hydraulic actuator and any other type of related engine components, which are to be actuated. For the closing operation of the actuator 10, the proportional valve 1 is set into the position shown in Fig. 1 such that a pressurized hydraulic fluid is guided from a supply into the hydraulic line 6, whereby a valve 4 is in an open condition such that the actuator is moved into the closed position, as indicated in Fig. 1 by the arrow beside the actuator 10. On the side of the drain line 7, the hydraulic liquid flows back to the tank of the hydraulic system via the open valve 14 and the proportional control valve 1.

On the other hand, as shown in Fig. 2, during the opening of the hydraulic actuator 10, the proportional valve 1 is switched into another position: the flow direction of the hydraulic liquid between the hydraulic liquid supply means and the tank is thereby reversed, still with the valves 4, 14 in an open state, such that the piston of the hydraulic actuator 10 is moved back into the open position (cf. arrow beside the actuator 10 in Fig. 2).

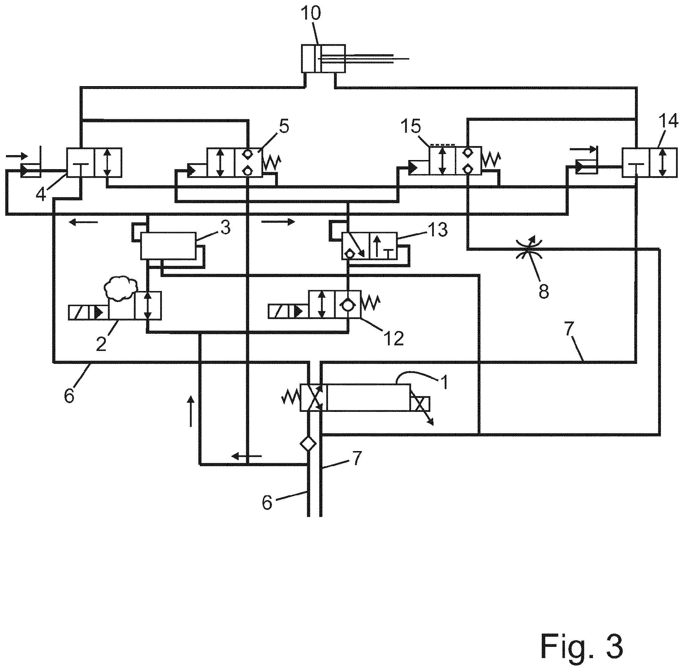

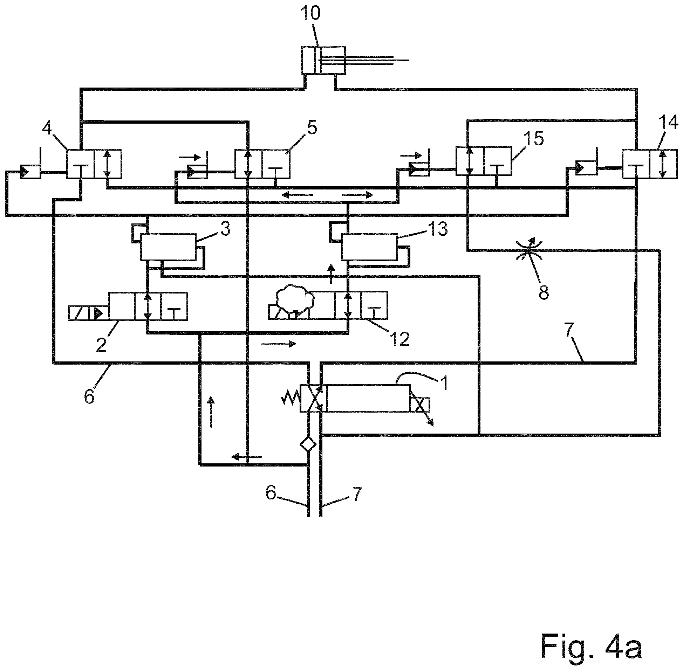

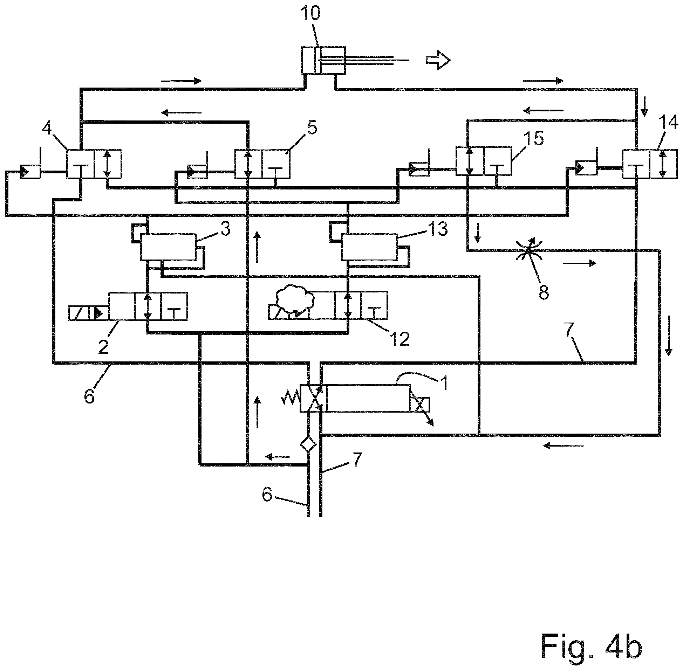

This hydraulic device is in addition to this normal operation cycle provided with an emergency operation cycle including a plurality of different valves and additional hydraulic lines, as shown in the drawings: when a failure of a component or with regard to sensor data occurs in the hydraulic system, the proportional valve 1 is put out of action, and different emergency operation modi are executed, as explained in connection with Figs. 3, 4a and 4b.

The device for an emergency operation according to the invention is used in case of a system failure, in particular with regard to the position of engine components and the actuator, the proportional valve itself or electronic components of the system, e.g. transducers, angle position transducers supplying bad data quality. Also in case of other types of failure in the (normal) hydraulic system, the emergency cycle according to the invention is used to bring the hydraulic actuator 10 and the connected engine parts into a required safe position. By means of such an emergency operation, any damages to machine parts are avoided, and the shut-down of a gas turbine, for example, can be realized in a controlled and safe manner.

The emergency cycle of the device according to the invention includes several additional valves and connecting hydraulic lines attached to the normal hydraulic operation cycle, as described with regard to the above Figs. 1 and 2.

The schematic hydraulic diagram of Fig. 3 shows an example not part of the invention of realization of an emergency operation modus, in which the emergency cycle brings the hydraulic actuator 10 in a blocked position. The emergency cycle shown in Fig. 3 includes two solenoid valves 2, 12, two hydraulically operated valves 3, 13, which are connected to the solenoid valves 2, 12, which can also be referred to as signal switch valves. Furthermore, two hydraulically operated valves 4, 14 and two hydraulically operated valves 5, 15 are provided, which are depending on the emergency operation modus activated by means of the signal switch valves, i.e. the solenoid valves 2, 12, and which can also be referred to as directly operated valves of the emergency cycle.

In the emergency operation blocking modus, as shown in Fig. 3, the first solenoid valve 2 is activated (opened). The valve 13 is in an open state, whereas the valves 4, 14, which are connected to the valve 3, are closed. Due to this closing of the hydraulically operated valves 4, 14, the hydraulic actuator 10 is brought into a blocked position, which is a position that has been given upon occurrence of the failure in the system. Any further movement of the activator 10 is thereby prevented. As can be seen from the schematic hydraulic diagram of Fig. 3, in this situation the proportional valve 1 used for the normal control of the actuator 10 is bypassed in this emergency operation modus due to the additional hydraulic lines between the supply of pressurized hydraulic liquid and the different valves of the emergency cycle. The emergency cycle of this example of realization is furthermore provided with a flow control valve 8, which is, for example, a manually adjustable orifice. By means of this flow control valve 8, the emergency switching speed can be set, for example the closing rate or closing speed, in case that the device for an emergency operation is used for putting the actuator into a closed position.

The actuation of the solenoid valve 2 for initiating the emergency operation blocking modus can be made automatically by means of adapted control means of the system and upon assessment of a failure or bad data in the sensors of the hydraulic system. Also in case of any problems with regard to the proportional valve or its electronic card and in case of missing feedback signals concerning an actual position of an engine component, which is connected to the hydraulic actuator 10, the emergency operation can be initiated by means of a switching of the solenoid valve 2. This switching of the solenoid valve 2 leads to an activation impulse to the hydraulically operated valves in order to put these valves into the respective required position for realizing the emergency operation modus according to the invention. When the solenoid valve 2 is switched, the emergency operation blocking modus is immediately initiated, and the position of the hydraulic actuator 10 will be blocked in its actual position and independently of the position of the proportional valve 1, which is bypassed in such a situation.

According to the invention, the hydraulic actuator 10 is not blocked, but is put into a predetermined safe position. Such an emergency closing operation modus of a device according to the invention is shown in the schematic hydraulic diagrams of Fig. 4a and Fig. 4b. Figure 4a shows for the purpose of comprehension only a situation, which is only present a very short time (part 1 of closing operation) before the final closing of the hydraulic actuator 10 takes place, as shown in Fig. 4b (part 2 of closing operation).

Also in this case, the emergency cycle is adapted to bypass the proportional valve 1 of the normal operation cycle, i.e. to put it out of action. The emergency operation closing modus is initiated by a simultaneous activation of the first solenoid valve 2 and the second solenoid valve 12. The hydraulically operated valve 13 opens, and thereby also the hydraulically operated valves 5, 15 will be switched into the open state (cf. Fig. 4a). Because of the opening of the valves 5, 15 and due to the bypassing of the proportional valve 1, the hydraulic actuator 10 is moved into its closed position, as shown by means of the thickened hydraulic lines and flow arrows in Fig. 4b. For example, in case that the hydraulic actuator 10 is used for the actuation of variable inlet guide vanes of a gas turbine, this closing of the inlet guide vanes is required due to safety specifications: in case of a failure in the hydraulic system or a part of the hydraulic system, the actuator is safely moved into its closed position by means of the device for an emergency operation according to the invention with the structure and components described in this specification. Hereby, damages to engine parts and parts of the gas turbine are avoided. The safe rundown of the gas turbine and its components, in particular the compressor, is thereby guaranteed.

Also here, the emergency cycle is provided with a flow control valve 8 in the drain line 7 to the tank of the hydraulic cycle. With the adjustment of such a flow control valve, the speed of the change from a normal operation modus into the emergency modus can be modified as required. For example, an emergency closing rate of the above-mentioned variable inlet guide vanes can hereby be adjusted. The flow control valve can be realized in any type of flow control valve known to a person skilled in the art, and in particular by means of a manually adjustable orifice.

Also here, the solenoid valves 2, 12 can be activated manually or can be activated automatically by an appropriate control means of the device (not shown in the drawings). The invention as described by means of an example of realization is not limited to the structure and components described in relation to the drawings. The device can have further additional means or can be different as regards the number of hydraulically operated valves or with respect to the solenoid valves, as long as the emergency cycle is adapted to bypass the normal control proportional valve 1 and to put the actuator 10 into a safe predefined emergency position.

## Claims

1. Device for emergency operation of a hydraulic actuator (10) for the actuation of a variable inlet guide vane of a gas turbine, the device has for normal operation of the actuator (10) an operation hydraulic circuit including at least a proportional valve (1) for switching to different operational conditions of said actuator (10) and said variable inlet guide vane, the proportional valve (1) being arranged in a supply line (6) of pressurized liquid and in a drain line (7) connected to a tank, and control means for operation control and supervising functions, wherein an emergency hydraulic circuit is attached to said operation circuit of said actuator (10) which is provided with a first solenoid valve (2) and a second solenoid valve (12) for initiating an emergency operation impulse in case of detected failures, a plurality of hydraulically operated switch valves (3, 13; 4, 14; 5, 15) which may be activated through said impulse of an emergency signal from said solenoid valves (2, 12), and whereby the emergency circuit comprises additional hydraulic lines connected to the valves of the emergency circuit and the supply line (6) of pressurized liquid upstream the proportional valve (1) to bypass said proportional valve (1) in emergency situations, the first solenoid valve (2) and the second solenoid valve (12) are provided such that upon simultaneous activation of them said actuator (10) is brought into an extended position of said actuator (10) corresponding to a closed position of the variable inlet guide vane of the gas turbine.

2. Device according to claim 1, **characterized in that** means for the detection of a correct functioning of said actuator (10) are provided for supplying an input signal or emergency signal to said control means.

3. Device according to claim 1 or 2, **characterized in that** said control means are connected to said solenoid valves (2, 12) for automatically switching to an emergency operation in case of failures in the normal operation modus of said actuator (10).

4. Device according to any one of the preceding claims, **characterized in that** said emergency circuit comprises a flow control valve (8) for adjusting a switching speed from normal operation to emergency operation.

5. Device according to any one of the preceding claims, **characterized in that** said control means are adapted to interrupt the emergency operation and resume normal operation upon request of a user.

6. Device according to any one of the preceding claims, **characterized in that** a detector for supervising the position of said proportional valve (1) is provided.

## Patentansprüche

1. Vorrichtung für den Notbetrieb eines hydraulischen Aktuators (10) zur Betätigung einer variablen Eintrittsleitschaufel einer Gasturbine, wobei die Vorrichtung für den normalen Betrieb des Aktuators (10) einen hydraulischen Betriebskreislauf hat, der mindestens ein Proportionalventil (1) zum Umschalten auf verschiedene Betriebsbedingungen des Aktuators (10) und der variablen Eintrittsleitschaufel aufweist, wobei das Proportionalventil (1) in einer Zuführungsleitung (6) der druckbeaufschlagten Flüssigkeit und in einer an einen Tank angeschlossenen Ablaufleitung (7) angeordnet ist, und Steuermittel für Betriebssteuerungs- und Überwachungsfunktionen, wobei ein hydraulischer Notkreislauf an den Betriebskreislauf des Aktuators (10) angeschlossen ist, der mit einem ersten Magnetventil (2) und einem zweiten Magnetventil (12) zum Einleiten eines Notbetriebsimpulses im Falle von festgestellten Fehlern ausgestattet ist, eine Vielzahl von hydraulisch betätigten Schaltventilen (3, 13; 4, 14; 5, 15), die durch den Impuls eines Notsignals von den Magnetventilen (2, 12) aktiviert werden können, und wobei der Notkreislauf zusätzliche hydraulische Leitungen umfasst, die an die Ventile des Notkreislaufs und die Zuführungsleitung (6) von druckbeaufschlagter Flüssigkeit dem Proportionalventil (1) vorgeschaltet angeschlossen sind, um das Proportionalventil (1) in Notsituationen zu umgehen, das erste Magnetventil (2) und das zweite Magnetventil (12) so vorgesehen sind, dass nach ihrer gleichzeitigen Aktivierung der Aktuator (10) in eine ausgefahrene Position des Aktuators (10) gebracht wird, die einer geschlossenen Position der variablen Eintrittsleitschaufel der Gasturbine entspricht.

2. Vorrichtung nach Anspruch 1, **dadurch gekennzeichnet, dass** Mittel zum Feststellen eines korrekten Funktionierens des Aktuators (10) vorgesehen sind, um ein Eingabesignal oder Notsignal an die Steuermittel zu liefern.

3. Vorrichtung nach Anspruch 1 oder 2, **dadurch gekennzeichnet, dass** die Steuermittel an die Magnetventile (2, 12) zum automatischen Umschalten auf einen Notbetrieb im Fall von Fehlern im normalen Betriebsmodus des Aktuators (10) angeschlossen sind.

4. Vorrichtung nach einem der vorhergehenden Ansprüche, **dadurch gekennzeichnet, dass** der Notkreislauf ein Durchflusssteuerventil (8) zum Einregeln einer Schaltgeschwindigkeit vom normalen Betrieb auf Notbetrieb umfasst.

5. Vorrichtung nach einem der vorhergehenden Ansprüche, **dadurch gekennzeichnet, dass** Steuermittel angepasst sind, um auf Verlangen eines Anwenders den Notbetrieb zu unterbrechen und den normalen Betrieb wieder aufzunehmen.

6. Vorrichtung nach einem der vorhergehenden Ansprüche, **dadurch gekennzeichnet, dass** ein Detektor zur Überwachung der Position des Proportionalventils (1) vorgesehen ist.

## Revendications

1. Dispositif pour l'actionnement d'urgence d'un actionneur hydraulique (10) pour l'actionnement d'une aube directrice d'entrée variable d'une turbine à gaz, le dispositif comportant, pour l'actionnement normal de l'actionneur (10), un circuit hydraulique d'actionnement comprenant au moins une vanne proportionnelle (1) pour commuter vers différentes conditions de fonctionnement dudit actionneur (10) et de ladite aube directrice d'entrée variable, la vanne proportionnelle (1) étant agencée dans une conduite d'alimentation (6) en liquide sous pression et dans une conduite d'évacuation (7) reliée à un réservoir, et des moyens de commande pour des fonctions de commande et de supervision d'actionnement, dans lequel un circuit hydraulique d'urgence est attaché audit circuit d'actionnement dudit actionneur (10) qui est pourvu d'une première électrovanne (2) et d'une deuxième électrovanne (12) pour lancer une impulsion d'actionnement d'urgence dans le cas de défaillances détectées, une pluralité de vannes de commutation actionnées hydrauliquement (3, 13 ; 4, 14 ; 5, 15) qui peuvent être activées par l'intermédiaire de ladite impulsion d'un signal d'urgence provenant desdites électrovannes (2, 12), et
moyennant quoi le circuit d'urgence comprend des conduites hydrauliques supplémentaires reliées aux vannes du circuit d'urgence et la conduite d'alimentation (6) en liquide sous pression en amont de la vanne proportionnelle (1) pour contourner ladite vanne proportionnelle (1) dans les situations d'urgence, la première électrovanne (2) et la deuxième électrovanne (12) sont prévues de sorte que, lors de l'activation simultanée de celles-ci, ledit actionneur (10) soit amené dans une position étendue dudit actionneur (10) correspondant à une position fermée de l'aube directrice d'entrée variable de la turbine à gaz.

2. Dispositif selon la revendication 1, **caractérisé en ce que** des moyens pour la détection d'un fonctionnement correct dudit actionneur (10) sont prévus pour fournir un signal d'entrée ou un signal d'urgence auxdits moyens de commande.

3. Dispositif selon la revendication 1 ou 2, **caractérisé en ce que** lesdits moyens de commande sont connectés auxdites électrovannes (2, 12) pour commuter automatiquement vers un actionnement d'urgence dans le cas de défaillances dans le mode d'actionnement normal dudit actionneur (10).

4. Dispositif selon l'une quelconque des revendications précédentes, **caractérisé en ce que** ledit circuit d'urgence comprend une vanne de régulation de débit (8) pour ajuster une vitesse de commutation de l'actionnement normal vers l'actionnement d'urgence.

5. Dispositif selon l'une quelconque des revendications précédentes, **caractérisé en ce que** lesdits moyens de commande sont conçus pour interrompre l'actionnement d'urgence et reprendre l'actionnement normal lors d'une demande d'un utilisateur.

6. Dispositif selon l'une quelconque des revendications précédentes, **caractérisé en ce qu'**un détecteur pour superviser la position de ladite vanne proportionnelle (1) est prévu.
